# FASCICULE DE BREVET EUROPEEN

(11) **EP 2 733 646 B1**
(45) Date de publication et mention de la délivrance du brevet: **23.08.2017**
(21) Numéro de dépôt: 13193004.2
(22) Date de dépôt: 15.11.2013
(51) Int. Cl.: G06K 19/077, H01L 21/683

(54) **Outil d'insertion d'un module dans un logement**
Werkzeug zum Einsetzen eines Moduls in eine Aussparung
Tool for inserting a module in a housing

(30) Priorité: 19.11.2012 FR 1260947
(43) Date de publication de la demande: 21.05.2014
(73) Titulaire: OBERTHUR TECHNOLOGIES, 92700 Colombes (FR)
(72) Inventeur: Gefffray, Franck, 92700 Colombes (FR); Samaran, Marion, 92700 Colombes (FR)
(74) Mandataire: Santarelli

(56) Documents cités:
- EP-A1- 1 033 677

## Description

La présente invention est relatif à un outil d'insertion d'un module dans un logement. Un tel outil, connu de EP 1 033 677 A1, est par exemple utilisé pour insérer un module constitué d'un microcircuit comprenant une plaque de contact et une puce dans un logement comprenant des lamages adaptés, réalisés dans une carte plastique mince, afin de réaliser une carte à microcircuit.

Il est connu, pour réaliser une telle opération d'insertion, d'employer un poussoir. A une extrémité de ce poussoir est disposé un moyen de maintien du module telle une ventouse. A cette même extrémité du poussoir est encore disposé un moyen d'appui apte à appuyer sur le module afin de l'insérer dans un logement en regard.

Afin de répartir la force d'appui exercée par le poussoir sur le module et obtenir une faible pression, il a été réalisé une première génération de poussoir dont la surface d'appui se confond avec la surface du module afin de présenter une surface de contact la plus grande possible. Cependant un tel mode de réalisation présente à l'usage l'inconvénient d'un risque important d'emprisonnement de poussières, tels des résidus de découpe du module, entre la surface d'appui du poussoir et la surface du module. Une telle poussière conduit, lors de l'appui réalisant l'insertion, à produire une marque préjudiciable sur le module.

Il a ensuite été réalisé une deuxième génération de poussoirs, où la surface d'appui est réduite à quelques plots, sensiblement ponctuels. Cependant un tel mode de réalisation présente l'inconvénient d'une pression plus importante, et peut conduire à une déformation préjudiciable du module, typiquement au droit d'un plot.

Il convient donc de trouver une forme de surface d'appui, apte à réaliser l'insertion dans de bonnes conditions, soit sans déformer le module, tout en présentant une étendue suffisamment réduite afin de limiter le risque d'emprisonnement de poussière.

La présente invention a pour objet un système selon la revendication 1. Selon une autre caractéristique de l'invention, le module présente une surface sensiblement plane et la surface d'appui est sensiblement plane.

Selon une autre caractéristique de l'invention, la surface d'appui est conformée pour pouvoir s'inscrire dans une empreinte du module.

Selon une autre caractéristique de l'invention, la surface d'appui est limitée par un contour extérieur sensiblement circulaire.

Selon une autre caractéristique de l'invention, la surface d'appui circonscrit la ventouse.

Selon une autre caractéristique de l'invention, la surface d'appui est traitée anti-statique.

Selon une autre caractéristique de l'invention, la ventouse est circulaire.

Selon une autre caractéristique de l'invention, le module est un microcircuit comprenant une plaque de contact présentant une grande empreinte sur une première épaisseur et une puce présentant une petite empreinte inscrite dans la grande empreinte sur une deuxième épaisseur, le logement comprend un premier lamage de profondeur adaptée à la première épaisseur et de dimensions adaptées à la grande empreinte et un deuxième lamage de profondeur adaptée à la deuxième épaisseur et de dimensions adaptées à la petite empreinte et disposé dans le premier lamage, et la surface d'appui est conformée de telle manière à pouvoir s'inscrire dans la grande empreinte privée de la petite empreinte, afin que la surface d'appui puisse être disposée en regard du premier lamage et incluse dans le premier lamage, sans être disposée en regard du deuxième lamage.

Selon une autre caractéristique de l'invention, la ventouse présente une empreinte disposée et conformée de telle manière à pouvoir s'inscrire dans la petite empreinte.

Selon une autre caractéristique de l'invention, l'outil comprend encore une coupelle entourant le moyen d'appui du poussoir, présentant une cavité complémentaire d'une grande empreinte d'un module apte à accueillir un module, et le poussoir comprend un moyen anti-rotation apte à empêcher une rotation de la coupelle relativement au poussoir.

Selon une autre caractéristique de l'invention, le moyen anti-rotation comprend au moins un méplat pratiqué dans le contour extérieur du moyen d'appui, de manière à venir en contact avec un bord de la cavité de la coupelle.

D'autres caractéristiques, détails et avantages de l'invention ressortiront plus clairement de la description détaillée donnée ci-après à titre indicatif en relation avec des dessins sur lesquels :
- la figure 1 présente un outil d'insertion dans son environnement d'utilisation au cours de l'insertion d'un module dans un logement,
- les figures 2 et 3 illustrent un module et son positionnement relativement à l'outil et différentes formes de surface d'appui,
- les figures 4-6 illustrent respectivement en vue de droite, en vue de face et en vue de dessous, un mode de réalisation préférentiel d'un outil d'insertion selon l'invention,
- la figure 7 illustre dans le plan de la vue de dessus, les superpositions des différentes empreintes.

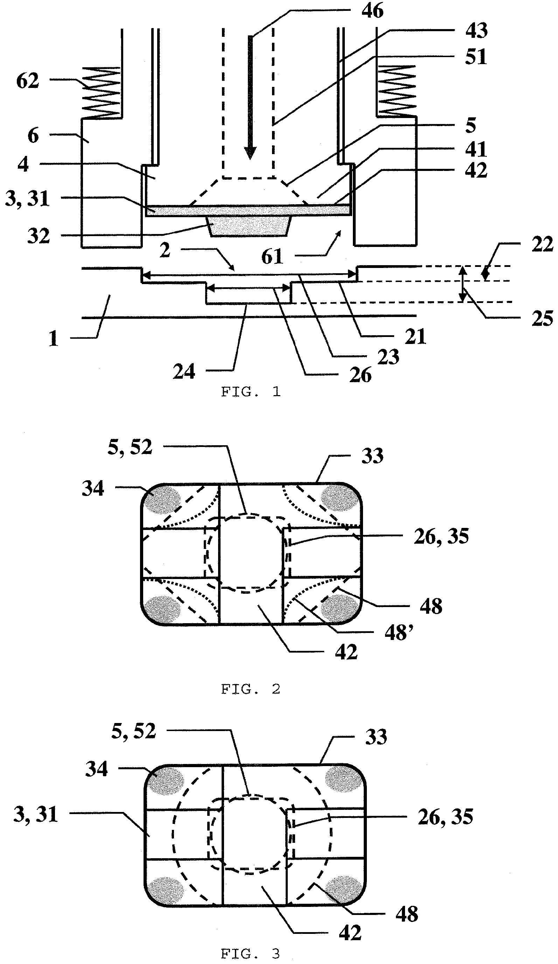

La figure 1 illustre en vue de profil, selon un mode de réalisation, un module 3 prêt à être inséré dans un logement 2, ménagé par exemple dans une carte 1. Ceci est réalisé au moyen d'un outil d'insertion 4, 5, 6.

Cet outil d'insertion comprend un poussoir 4, animé d'un mouvement 46 sensiblement rectiligne, transmis par une machine non représentée, via un corps 43 du poussoir 4.

Une extrémité du poussoir 4 comprend une ventouse 5. Une conduite 51 qui prolonge la ventouse 5, ici au travers du corps 43 du poussoir 4, permet de réaliser de manière commandée une aspiration. Ainsi la ventouse 5 peut sélectivement, en fonction de la commande ou non commande d'aspiration, maintenir un module 3 plaqué à l'extrémité du poussoir 4. La même extrémité du poussoir 4 comprend encore un moyen d'appui 41 apte à appuyer sur le module 3, lors de son insertion dans le logement 2.

La ventouse 5 est avantageusement disposée, relativement à la surface d'appui 42 du moyen d'appui 41, de manière à affleurer, afin de pouvoir assurer le maintien du module 3 sans contrarier l'appui par la surface d'appui 42 sur le module 3.

Une insertion se déroule typiquement selon le séquencement suivant. L'extrémité du poussoir 4 comprenant la ventouse 5 est placée en contact d'un module 3. Une aspiration est réalisée au moyen de la conduite 51 afin que la ventouse 5 maintienne le module 3. L'ensemble poussoir 4, ventouse 5 et module 3 peut alors être déplacé, relativement à un logement 2, jusqu'à se trouver en regard, dans une position préparatoire à une insertion, telle que représentée à la figure 1. Le poussoir 4 est ensuite déplacé selon la direction 46, emportant la ventouse 5, qui maintient toujours le module 3. Le module 3 est présenté au logement 2. Le moyen d'appui 41 agit alors selon la direction 46 en appuyant sur le module 3 de manière à l'insérer dans le logement 2. L'aspiration appliquée à la ventouse 5 peut être relâchée pendant ou à l'issue de l'insertion, afin de désolidariser la ventouse 5 du module 3. L'outil 4-6 peut alors être retiré. L'ensemble du précédent séquencement s'effectue en environ 500 ms.

Selon une caractéristique essentielle de l'invention, la surface d'appui 42 du moyen d'appui 41, apte à venir en contact avec le module 3, laisse libres les coins 34 du module 3, en ce qu'elle ne les recouvre pas. Ceci est particulièrement avantageux lors de l'opération d'insertion. En effet il a pu être observé qu'un appui sur les dits coins 34 n'est pas nécessaire pour réaliser correctement l'insertion du module 3 dans son logement 2. De plus, le phénomène préjudiciable d'emprisonnement de poussière entre la surface d'appui 42 et la surface du module 3, conduisant à marquer le module 3, lors de l'appui effectué pour réaliser l'insertion, se trouve ainsi grandement réduit, la poussière s'accumulant préférentiellement dans les coins 34 du module 3.

La figure 2 deux formes du contour extérieur 48 de la surface d'appui 42, en regard d'un module 3 et de son empreinte 33. Une première forme de contour extérieur 48 illustrée en trait tireté peut être, par exemple un octogone. Une autre forme de contour extérieur 48' illustrée en trait pointillé comporte des épargnes circulaires au niveau des coins 34. Tout autre forme est possible, dans la mesure où elle épargne tout ou partie des zones de coins 34.

De manière générale, dans un plan perpendiculaire à la direction d'appui 46, la surface d'appui 42 présente une forme complémentaire de la forme de la surface du module 3 en regard. Ceci permet avantageusement au module 3 de se positionner de manière univoque sur la surface d'appui 42 et de maximiser la surface de contact entre le moyen d'appui 41 et le module 3 afin de répartir la force d'appui appliquée par le poussoir 4 au module 3, lors de l'appui réalisant l'insertion.

Ainsi, selon un mode de réalisation préférentiel, où le module 3 présente une surface sensiblement plane, la surface d'appui 42 est aussi sensiblement plane, afin de présenter une surface complémentaire à la surface du module 3.

Les figures 2 et 3, illustrent une caractéristique avantageuse selon un mode de réalisation, et montrent, selon une direction 46 d'observation, un module 3, en place à l'extrémité d'un poussoir 4 pour être inséré, superposé avec la surface d'appui 42 du poussoir 4. Selon ce mode de réalisation, la surface d'appui 42 est telle qu'elle puisse se superposer avec un module 3 en étant entièrement contenue dans l'empreinte 33 du dit module 3. Pour cela il convient que le contour extérieur 48 de la surface d'appui 42 puisse être inscrit dans l'empreinte 33 d'un module 3.

Selon une autre caractéristique avantageuse, illustrée plus particulièrement à la figure 3, la surface d'appui 42 est limitée par un contour extérieur 48 sensiblement circulaire.

Un premier avantage d'un tel contour circulaire 48 est que la surface d'appui 42 répartit de manière régulière les efforts d'appui sur le module 3, réduisant ainsi les risques de déformation ou de rupture du module 3, lors de l'insertion.

Un autre avantage d'un tel contour circulaire 48 est qu'il peut aisément être réalisé par tournage, réduisant ainsi avantageusement le coût de fabrication d'un poussoir 4.

La forme circulaire est encore avantageuse en ce qu'elle libère les coins 34, pour les modules 3 présentant une forme allongée.

Il a été vu précédemment que la surface d'appui 42 est disposée à la même extrémité du poussoir 4 que la ventouse 5. Selon une disposition avantageuse, le moyen d'appui 41 entoure la ventouse 5 et ainsi la surface d'appui 42 circonscrit une empreinte 52 de la ventouse 5. Ceci conduit à délimiter une surface d'appui 42 sensiblement annulaire, comprise entre le contour extérieur 48 qui la limite par l'extérieur et l'empreinte 52 de la ventouse 5 qui la limite par l'intérieur.

Afin de limiter encore le phénomène préjudiciable d'emprisonnement de poussière entre la surface d'appui 42 et la surface du module 3, le moyen d'appui 41, et tout particulièrement la surface d'appui 42, est traité anti-statique. Ceci peut être réalisé par un choix de matériau. Le poussoir 4 peut ainsi être réalisé en matériau métallique, tel de l'acier rapide à outil, enrichi au chrome, vanadium, molybdène et tungstène, type ASP23, qui présente intrinsèquement une caractéristique d'adhésion de poussière réduite. Ceci peut être complété par un traitement de surface comprenant un dépôt métallique, par exemple réalisé sous vide. Un tel traitement de surface anti-statique peut être un traitement référence DMX DM2400 comprenant un dépôt d'aluminium, de chrome et d'azote.

La ventouse 5 est avantageusement réalisée en matériau élastomère. Afin de répartir la force de succion et d'utiliser un composant standard, cette ventouse 5 présente typiquement une forme extérieure 52 ou empreinte 52 circulaire.

Selon une caractéristique additionnelle le matériau de la ventouse 5 est choisi de préférence apte à résister à des températures élevées, supérieures à 250°C. Ceci permet de réaliser un traitement thermique sur le module 3, typiquement d'activation d'un adhésif, lorsque le module 3 est maintenu par la ventouse 5.

Selon un mode de réalisation, le logement 2 est disposé dans une carte plastique mince 1. Cette carte est typiquement composée de plastiques, de composés plastiques et papiers ou de composés de papiers ou de papiers et de colles. Pour les plastiques il peut être utilisé tout type de thermoplastiques laminés, tel que PVC, PET, PBT, ABS, PC, polyéthylène, polypropylène, nylon ou PMMA.

Cette carte peut, par exemple, présenter un format issu du standard ISO 7810, avec des dimensions de quelques dizaines de millimètres pour une épaisseur relativement mince de l'ordre du millimètre ou moins.

Selon un mode de réalisation le module 3 est un microcircuit 3 que l'on souhaite insérer dans une carte 1, afin de réaliser une carte à puce pour une application bancaire, d'identification, ou autre.

Un tel microcircuit 3 comprend une plaque de contact 31 et une puce 32 adjointe. La plaque de contact 31 se caractérise par une grande empreinte 33 sur une première épaisseur 36. La puce 32 se caractérise par une empreinte 35 plus petite, inscrite dans la grande empreinte 33 sur une deuxième épaisseur 37.

Afin d'accueillir un tel module 3, le logement 2 comprend avantageusement deux lamages 21, 24. Le premier lamage 21 présente une profondeur 22 adaptée à la première épaisseur 36 de la plaque de contact 31. Le plus souvent cette adaptation est telle que la profondeur 22 soit égale à l'épaisseur 36, afin que la plaque de contact 31, une fois mise en place dans le lamage 1, affleure à la surface extérieure de la carte 1. Dans le plan de la carte 1, le premier lamage 21 présente des dimensions 23 adaptées à la grande empreinte 33. Le plus souvent cette adaptation est telle que la forme 23 du premier lamage 21 dans le plan de la carte 1 est identique à la grande empreinte 33. La tolérance est même avantageusement telle que la plaque de contact 31 soit montée en force dans le premier lamage 21, un ajustement serré assurant ou contribuant à l'assemblage de la plaque de contact 31 et donc du module 3 avec la carte 1.

Le deuxième lamage 24 présente une profondeur 25 adaptée à la deuxième épaisseur 37 de la puce 32. Le plus souvent cette adaptation est telle que la profondeur 25 soit supérieure à l'épaisseur 37, afin que la puce 32 et son éventuelle connectique disposent de place, et qu'elles ne risquent pas de venir rencontrer la carte 1 lors de l'insertion. Dans le plan de la carte 1, le deuxième lamage 21 présente des dimensions 26 adaptées à la petite empreinte 35. Le plus souvent cette adaptation est telle que la forme 26 du deuxième lamage 24 dans le plan de la carte 1 encadre largement la petite empreinte 35, afin que la puce 32 et son éventuelle connectique disposent de place, et qu'elles ne risquent pas de venir rencontrer la carte 1 lors de l'insertion.

Le deuxième lamage 24 est disposé inscrit relativement au premier lamage 21 selon une disposition similaire à celle de la petite empreinte 35 relativement à la grande empreinte 33.

Une autre caractéristique avantageuse, est plus particulièrement illustrée aux figures 2, 3 et 7, montrant selon la direction d'insertion 46, un module 3 superposé à un poussoir 4. Comme décrit précédemment, afin de pouvoir réaliser correctement l'insertion, la surface d'appui 42 de l'outil 4 est avantageusement conformée de telle manière à pouvoir s'inscrire dans la grande empreinte 33 constituant le profil le plus externe du module 3, lorsque le module 3 est en place à l'extrémité de l'outil 4. Ainsi le contour externe 48 de la surface d'appui 42 peut être inclus/inscrit dans la grande empreinte 33, lorsque l'outil 4 est en position d'insertion relativement au module 3, soit sensiblement centré. Dans les modes de réalisation où la surface d'appui 42 est privée d'une partie centrale, par exemple pour réaliser un logement pour la ventouse 5, la surface d'appui 42 présente une forme sensiblement annulaire.

Selon une caractéristique avantageuse, la partie centrale ôtée de la surface d'appui 42 est avantageusement sensiblement superposable, en position d'insertion, avec la petite empreinte 35. Ainsi, avantageusement la surface d'appui 42 se trouve disposée principalement en regard du premier lamage 21 et incluse dans le premier lamage 21, lorsque l'outil 4 est en position relativement au module 3, mais ne présente pas ou peu de surface en regard du deuxième lamage 24. Ceci permet avantageusement, lors de l'appui réalisant l'insertion du module 3 dans le logement 2 d'appuyer la plaque de contact 31 contre le fond du premier lamage 21, sans appuyer sur la zone au droit de la puce 32 et du deuxième lamage 24, où un espace libre peut persister entre le fond du deuxième lamage 24 et la puce 32. Ceci limite grandement les efforts de flexion appliqués au module 3 qui autrement risqueraient de le déformer ou de le détériorer.

Cette partie centrale ainsi libérée, au droit du deuxième lamage 24, est avantageusement employée pour disposer la ventouse 5. Ainsi, selon un mode de réalisation, l'empreinte 52 de la ventouse 5 est avantageusement superposable avec la petite empreinte 35, ou même inscrite dans cette dernière.

Selon un mode de réalisation le module 3 présente un contour externe rectangulaire. Ainsi la grande empreinte 33 est sensiblement rectangulaire. Ceci correspond à de nombreux cas de modules 3 réellement utilisés.

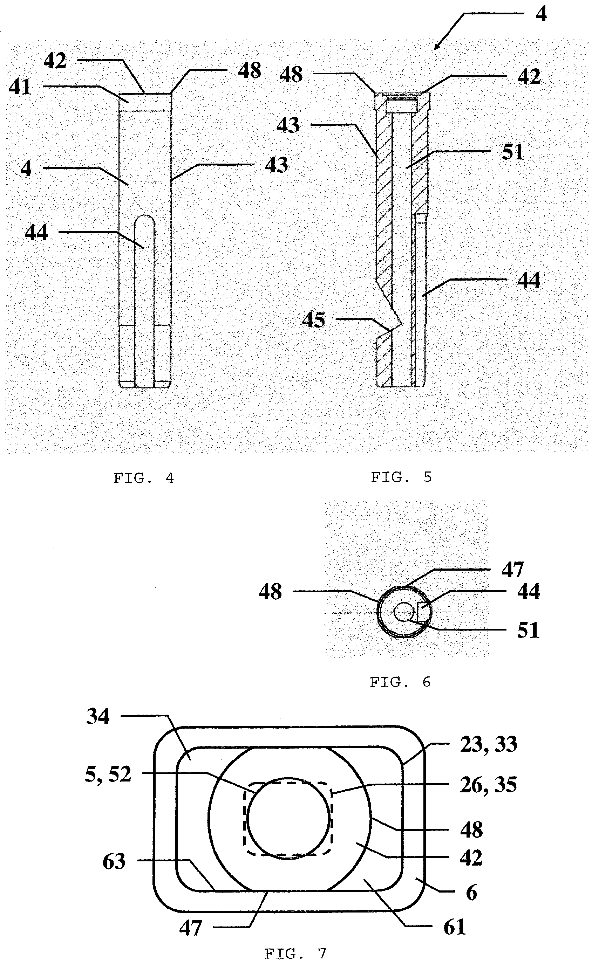

Les figures 4-6 présentent selon un mode de représentation classique en trois vues, un mode de réalisation possible d'un poussoir 4 selon l'invention. La figure 4 est une vue de droite, la figure 5 est une vue de face et la figure 6 est une de dessous.

L'extrémité, représentée en haut sur les figures 4 et 5, comprend un moyen d'appui 41. Une surface d'appui 42 est ici sensiblement plane, annulaire limitée par un contour externe sensiblement circulaire 48 et par une découpe circulaire centrale. Dans cette découpe centrale est ménagé une ouverture dans laquelle peut être placée une ventouse 5 (non représentée). Ladite ventouse 5 est disposée de manière à venir affleurer la surface d'appui 42.

Le corps 43 du poussoir 4, avantageusement cylindrique à l'instar du moyen d'appui 41, permet avantageusement une réalisation par tournage.

Le corps 43 est percé d'une conduite 51 qui permet de relier fluidiquement une sortie de la ventouse 5 avec un dispositif d'aspiration (non représenté) afin de mettre en oeuvre la fonction de maintien du module 3 par aspiration de la ventouse 5. Une encoche 45 est ménagée dans le corps 43 afin de permettre un entrainement du poussoir 4 selon la direction d'insertion 46.

Le corps 43 comprend encore une rainure 44 apte à accueillir un clavetage destiné à interdire une rotation du poussoir 4 autour de son axe, confondu avec la direction d'insertion 46.

Selon un mode de réalisation, plus particulièrement illustré aux figures 1 et 7, l'outil comprend encore avantageusement une coupelle 6. Cette coupelle 6 entoure le moyen d'appui 41 du poussoir 4. La coupelle présente une cavité 61, complémentaire d'une grande empreinte 33 d'un module 3 afin de pouvoir accueillir un module 3. La coupelle 6 a pour fonction de maintenir le module 3 avant l'étape d'insertion en empêchant tout mouvement de translation du module 3 dans un plan perpendiculaire à la direction d'insertion 46, ainsi que tout mouvement de rotation du module 3 autour de la direction d'insertion 46.

Ainsi, tel qu'illustré à la figure 7, la forme intérieure 63 de la cavité 61 dans le plan perpendiculaire à la direction d'insertion 46, est apte à se superposer avec la grande empreinte 33 qui délimite un module 3.

La coupelle 6 guide ainsi le module 3 dans l'étape d'approche où le module 3 est présenté devant le logement 2. Lors de l'appui du poussoir 4 qui réalise effectivement l'insertion, la coupelle 6 est apte à s'escamoter. Ceci est possible par exemple par un guidage coulissant de la coupelle 6 relativement au poussoir 4, selon la direction d'insertion 46. Ainsi, dans le mode de réalisation représenté à la figure 1, durant l'étape d'approche, la coupelle 6 est en position basse relativement au poussoir 4 jusqu'à venir contre une butée. Ce faisant, la coupelle 6 dépasse du poussoir 4 et sa cavité 61 vient entourer le module 3. Le maintien de la coupelle 6 en position basse peut être réalisé par l'effet de la pesanteur, et/ou le cas échéant être complété par l'action d'un moyen de rappel 62.

Lors de la phase d'insertion, la coupelle 6 vient buter contre la surface externe de la carte 1. Elle se trouve ainsi retenue et s'escamote pendant que le poussoir 4, entraînant le module 3 continue son mouvement selon la direction d'insertion 46, afin d'insérer le module 3 dans le logement 2.

Puisqu'une des fonctions de la coupelle 6 est d'empêcher la rotation du module 3 autour de la direction d'insertion 46, il convient que la coupelle 6 elle-même ne puisse pas tourner.

Selon l'art antérieur, le moyen d'appui 41 du poussoir 4 recouvre la totalité de la surface du module 3. Ainsi le moyen d'appui 41 n'est pas circulaire et présente une forme complémentaire de la forme de la coupelle 6 au niveau de sa cavité 61. Cette complémentarité de formes, le plus souvent non circulaires, crée naturellement un moyen anti-rotation de la coupelle 6 relativement au poussoir 4 autour de la direction d'insertion 46.

Cependant avec un poussoir 4 selon l'invention dont la forme extérieure 48 est quelconque, ceci n'est plus garanti. Aussi il convient de recréer, particulièrement pour un poussoir 4 circulaire, un moyen anti-rotation 47 afin d'empêcher une rotation de la coupelle 6 relativement au poussoir 4.

Selon un premier mode de réalisation ceci peut être réalisé par un clavetage, ou tout autre moyen équivalent, disposé entre le corps 43 du poussoir 4 et le corps en regard de la coupelle 6, autorisant une translation relative selon la direction 46 mais pas une rotation autour de la direction 46.

Selon un autre mode de réalisation préférentiel, particulièrement visible à la figure 7, ceci peut être réalisé en pratiquant au moins un méplat 47, deux sont figurés dans l'exemple illustré, sur la périphérie circulaire extérieure 48 du moyen d'appui 41 du poussoir 4. Ce au moins un méplat 47 est tel qu'il vienne en regard d'une forme complémentaire 63 du contour intérieur de la cavité 61 de la coupelle 6. Ainsi la coupelle 6 ne peut tourner relativement au poussoir 4 autour de la direction 46, mais peut se translater selon la direction 46 afin de s'escamoter.

Afin que le rapport de la surface d'appui 42 à la surface d'un module 3 reste suffisamment élevé pour permettre une insertion tout en conservant une pression d'appui faible, les dimensions de la surface d'appui 42 et particulièrement du contour externe 48 peuvent être adaptées en fonction des dimensions du module 3.

Dans le cas d'un module 3 comprenant une plaque de contact 31 de forme allongée, la dimension de la surface d'appui 42 correspondant à la largeur du module 3 est ainsi avantageusement prise égale à ladite largeur.

Ainsi pour un module 3 de dimensions 11x8,32mm, le contour 48 de la surface d'appui présente avantageusement une dimension sensiblement égale à 8,32mm. Dans le cas d'un contour externe 48 circulaire, le diamètre est sensiblement égal à 8,32mm. Dans un mode de réalisation comprenant un double méplat 47, ce diamètre est avantageusement augmenté à 8,5mm afin de pouvoir obtenir une côte de 8,1mm entre les deux méplats 47 opposés.

Selon un autre exemple, pour un module 3 de dimensions 13x11,8mm, le contour 48 de la surface d'appui présente avantageusement une dimension sensiblement égale à 11,8mm. Dans le cas d'un contour externe 48 circulaire, le diamètre est sensiblement égal à 11,8mm, ou le cas échéant augmenté à 12mm afin de permettre de retire la côte du ou des méplats 47.

## Revendications

1. Système comprenant un module (3), un logement (2) et un outil d'insertion du module (3) dans le logement (2), le module (3) étant un microcircuit comprenant une plaque de contact (31) présentant une grande empreinte (33) sur une première épaisseur (36) et une puce (32) présentant une petite empreinte (35) inscrite dans la grande empreinte (33) sur une deuxième épaisseur (37), le logement (2) comprenant un premier lamage (21) de profondeur (22) adaptée à la première épaisseur (36) et de dimensions (23) adaptées à la grande empreinte (33) et un deuxième lamage (24) de profondeur (25) adaptée à la deuxième épaisseur (37) et de dimensions (26) adaptées à la petite empreinte (35) et disposé dans le premier lamage (21), et l'outil comprenant un poussoir (4), une ventouse (5) disposée à une extrémité du poussoir (4) apte à sélectivement maintenir le module (3), un moyen d'appui (41) disposé à la même extrémité du poussoir (4) apte à appuyer sur le module (3), une surface d'appui (42) du moyen d'appui (41), apte à venir en contact avec le module (3), étant conformée de manière à laisser libres les coins (34) du module (3), **caractérisé en ce que** ladite surface d'appui est conformée de manière à pouvoir s'inscrire dans la grande empreinte (33) privée de la petite empreinte (35) .

2. Système selon la revendication **1,** où le module (3) présente une surface sensiblement plane et où la surface d'appui (42) est sensiblement plane.

3. Système selon l'une quelconque des revendications **1** ou **2,** où la surface d'appui (42) est limitée par un contour extérieur (48) sensiblement circulaire.

4. Système selon l'une quelconque des revendications **1** à **3,** où la surface d'appui (42) circonscrit la ventouse (5).

5. Système selon l'une quelconque des revendications **1** à **4,** où la surface d'appui (42) est traitée anti-statique.

6. Système selon l'une quelconque des revendications **1** à **5,** où la ventouse (5) est circulaire.

7. Système selon la revendication **6,** où la ventouse (5) présente une empreinte (52) disposée et conformée de telle manière à pouvoir s'inscrire dans la petite empreinte (35).

8. Système selon l'une quelconque des revendications **1** à **7,** comprenant encore une coupelle (6) entourant le moyen d'appui (41) du poussoir (4), présentant une cavité (61) complémentaire d'une grande empreinte (33) d'un module (3) apte à accueillir un module (3), où le poussoir (4) comprend un moyen anti-rotation (47) apte à empêcher une rotation de la coupelle (6) relativement au poussoir (4).

9. Système selon la revendication **8,** où le moyen anti-rotation (47) comprend au moins un méplat (47) pratiqué dans le contour extérieur (48) du moyen d'appui (41), de manière à venir en contact avec un bord (63) de la cavité (61) de la coupelle (6).

## Patentansprüche

1. System, umfassend ein Modul (3), eine Aussparung (2) und ein Werkzeug zum Einsetzen des Moduls (3) in die Aussparung (2), wobei das Modul (3) eine Mikroschaltung ist, umfassend eine Kontaktplatte (31), die eine große Prägung (33) auf einer ersten Dicke (36) aufweist, und einen Chip (32), der eine kleine Prägung (35) aufweist, die in der großen Prägung (33) auf einer zweiten Dicke (37) aufgenommen ist, wobei die Aussparung (2) umfasst: eine erste Vertiefung (21) mit einer Tiefe (22) angepasst an die erste Dicke (36), und mit Abmessungen (23) angepasst an die große Prägung (33), und eine zweite Vertiefung (24) mit einer Tiefe (25) angepasst an die zweite Dicke (37), und mit Abmessungen (26) angepasst an die kleine Prägung (35), und die in der ersten Vertiefung (21) angeordnet ist, und wobei das Werkzeug umfasst: einen Schieber (4), einen Saugnapf (5), angeordnet an einem Ende des Schiebers (4), der geeignet ist, das Modul (3) selektiv zu halten, ein an demselben Ende des Schiebers (4) angeordnetes Abstützmittel (41), das geeignet ist, das Modul (3) zu stützen, eine Stützfläche (42) des Abstützmittels (41), die geeignet ist, mit dem Modul (3) in Kontakt zu gelangen, wobei diese derart ausgebildet ist, dass sie die Ecken (34) des Moduls (3) freilässt, **dadurch gekennzeichnet, dass** die Stützfläche derart ausgebildet ist, dass sie auf der großen Prägung (33) ohne die kleine Prägung (35) aufgenommen werden kann.

2. System nach Anspruch 1,
wobei das Modul (3) eine im Wesentlichen ebene Fläche aufweist, und wobei die Stützfläche (42) im Wesentlichen eben ist.

3. System nach einem der Ansprüche 1 oder 2,
wobei die Stützfläche (42) durch eine im Wesentlichen kreisförmige Außenkontur (48) begrenzt ist.

4. System nach einem der Ansprüche 1 bis 3,
wobei die Stützfläche (42) den Saugnapf (5) umgibt.

5. System nach einem der Ansprüche 1 bis 4,
wobei die Stützfläche (42) antistatisch behandelt ist.

6. System nach einem der Ansprüche 1 bis 5, wobei der Saugnapf (5) kreisförmig ist.

7. System nach Anspruch 6,
wobei der Saugnapf (5) eine Prägung (52) aufweist, die derart angeordnet und ausgebildet ist, dass sie in der kleinen Prägung (35) aufgenommen werden kann.

8. System nach einem der Ansprüche 1 bis 7,
ferner umfassend eine Schale (6), die das Abstützmittel (41) des Schiebers (4) umgibt, einen Hohlraum (61) aufweist, der komplementär ist zu einer großen Prägung (33) eines Moduls (3), die geeignet ist, ein Modul (3) aufzunehmen, wobei der Schieber (4) ein Antirotationsmittel (47) umfasst, das geeignet ist, eine Rotation der Schale (6) relativ zu dem Schieber (4) zu verhindern.

9. System nach Anspruch 8,
wobei das Antirotationsmittel (47) mindestens eine Abflachung (47) umfasst, die in der Außenkontur (48) des Abstützmittels (41) ausgeführt ist, um mit einem Rand (63) des Hohlraums (61) der Schale (6) in Kontakt zu gelangen.

## Claims

1. System comprising a module (3), a housing (2) and a tool for inserting the module (3) into the housing (2), the module (3) being a microcircuit comprising a contact plate (31) having a large imprint (33) over a first thickness (36) and a chip (32) having a small imprint (35) inscribed in the large imprint (33) over a second thickness (37), the housing (2) comprising a first countersink (21) with a depth (22) matched to the first thickness (36) and with dimensions (23) matched to the large imprint (33) and a second countersink (24) with a depth (25) matched to the second thickness (37) and with dimensions (26) matched to the small imprint (35) and arranged in the first countersink (21), and the tool comprising a pusher (4), a sucker (5) arranged at an end of the pusher (4) capable of selectively holding the module (3), a bearing means (41) arranged at the same end of the pusher (4) capable of pressing on the module (3), a bearing surface (42) of the bearing means (41), capable of coming into contact with the module (3), being conformed so as to leave the corners (34) of the module (3) free, **characterized in that** said bearing surface is conformed so as to be able to be inscribed in the large imprint (33) having no small imprint (35) .

2. System according to Claim 1, in which the module (3) has a substantially planar surface and in which the bearing surface (42) is substantially planar.

3. System according to either one of Claims 1 and 2, in which the bearing surface (42) is limited by a substantially circular outer profile (48).

4. System according to any one of Claims 1 to 3, in which the bearing surface (42) circumscribes the sucker (5) .

5. System according to any one of Claims 1 to 4, in which the bearing surface (42) has an anti-static treatment.

6. System according to any one of Claims 1 to 5, in which the sucker (5) is circular.

7. System according to Claim 6, in which the sucker (5) has an imprint (52) arranged and conformed so as to be able to be inscribed in the small imprint (35).

8. System according to any one of Claims 1 to 7, also comprising a cup (6) surrounding the bearing means (41) of the pusher (4), having a cavity (61) complementing a large imprint (33) of a module (3) capable of accommodating a module (3), in which the pusher (4) comprises an anti-rotation means (47) capable of preventing a rotation of the cup (6) relative to the pusher (4).

9. System according to Claim 8, in which the anti-rotation means (47) comprises at least one flat spot (47) formed in the outer profile (48) of the bearing means (41), so as to come into contact with an edge (63) of the cavity (61) of the cup (6).
